# EUROPEAN PATENT SPECIFICATION

(11) **EP 1 301 925 B1**
(45) Date of publication and mention of the grant of the patent: **25.02.2004**
(21) Application number: 01951453.8
(22) Date of filing: 11.07.2001
(51) Int. Cl.: G11B 7/09

(54) **METHOD FOR IMPROVED READING OF A DIGITAL DATA DISC**
VERFAHREN ZUR VERBESSERTEN WIEDERGABE EINER DIGITALEN DATENPLATTE
PROCEDE DE LECTURE AMELIOREE D'UN DISQUE DE DONNEES NUMERIQUES

(30) Priority: 12.07.2000 DK 200001080
(43) Date of publication of application: 16.04.2003
(73) Proprietor: Disccontrol APS, 9270 Klarup (DK)
(72) Inventor: ANDERSEN, Palle, DK-9270 Klarup (DK); PEDERSEN, Tom, Sondergaard, DK-9320 Hjallerup (DK); STOUSTRUP, Jakob, DK-9520 Skorping (DK); VIDAL SANCHEZ, Enrique, DK-9220 Aalborg Ost (DK)
(74) Representative: Nielsen, Leif
(86) International application number: PCT/DK2001/000485
(87) International publication number: WO 2002/005271

(56) References cited:
- EP-A2- 0 207 374
- EP-A2- 0 363 195
- GB-A- 2 165 064
- US-A- 4 286 318

## Description

The present invention relates to a method for regulating the control signal for adjustment of the optical path between a data disc and a signal pick-up detector system in a data disc drive according to the preamble of claim 1.

### Description of Prior Art

At the beginning of the 80's, the Compact Disc (CD) was introduced to the market, starting the era of Optical Disc Drives (ODD), which are characterised among other things, by the absence of the physical contact between the signal pick-up and the disc. Feedback control is therefore necessary to control the position of the pick-up to be able to read the data from the disc. Two main control loops can be identified: the electronic focus loop which maintains the focus point of the laser on the signal layer, and the electronic radial loop which follows the track. A closed feedback control loop is formed when a physical variable (in this case the position relative to the track or relative to the signal layer) is measured and used to calculate a control signal which influences this physical variable (here the control signal is a voltage fed to a coil able to move the pick-up.

A data track on an optical disc, for example a music compact disc, a CD-ROM or a digital video disc, consists of so called pits which have a reflectivity different from the surrounding areas of the optical disc. The change of reflectivity is detected during rotation of the disc and information is extracted therefrom. The reflectivity is measured by an optical multi beam system, where laser light is focused on the optical disc and reflected into a detector system.

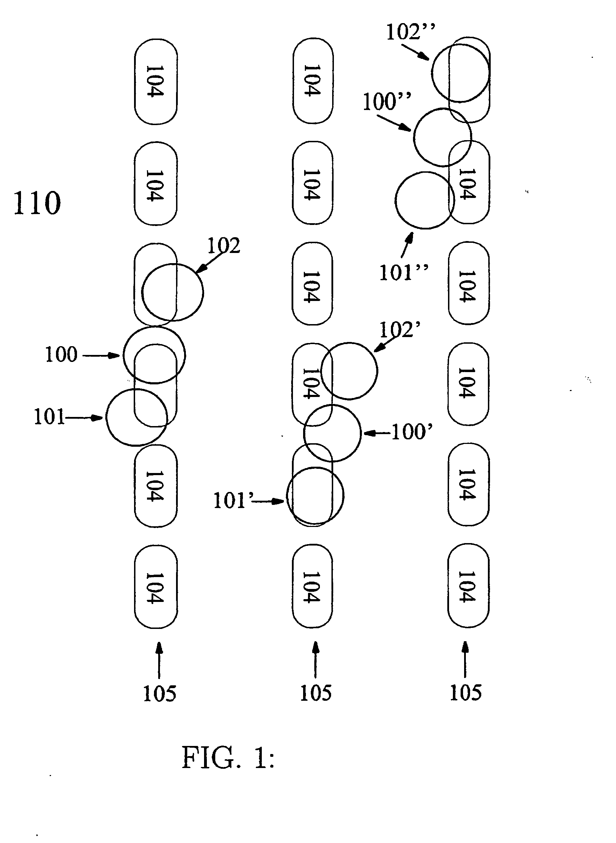

Typically for the reading of a CD-ROM, three beams are applied for the reading and the control function. These three beams may be produced from a single laser by a beam splitter arrangement. One beam is intended to follow the track with the pits to be read for the information extraction, while two satellite beams are used in the radial loop for centring the central beam on the track. The position of the satellite beams 101 and 102 and the central beam 100 is illustrated in FIG. 1. The aim is to centre the central beam 100 with respect to the pits 104. In case that the central beam 100 is centred, the reflected intensities of the side beams 101, 102 are identical. However, in case that the beams are off-centred with respect to the track, as illustrated with beams 100', 101', and 102' or with beams 100", 101", and 102", the reflected signals from the two satellite beams 101', 102' or 101 ", 102" are different and can be used for a radial adjustment of the laser beam 100.

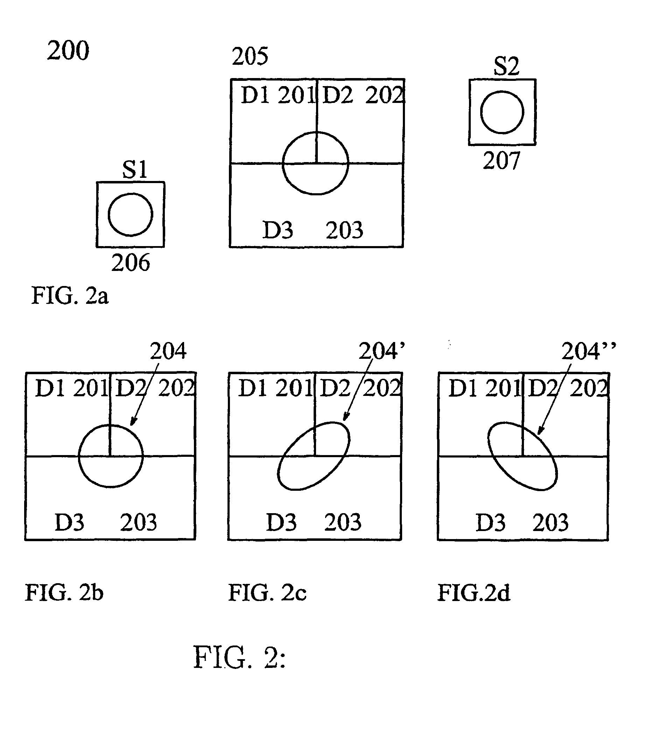

For adjustment of the position of the focus on the signal layer, which can be on or in the optical disc, typically a split detector system with a number of sectors is employed. Such a detector system 200 is shown in FIG. 2 with three sectors 201, 202, and 203. In FIG. 2b, the situation is shown, where the central beam is focused on the disc. In this case, the reflected image 204 on the detector 205 is circular. In case of defocusing, the reflected image 204', 204" of the central beam on the detector, as shown in FIG. 2c and 2d, respectively, turns into ellipses due to astigmatism. The signal D1 in the first sector 201 and the signal D2 in the second sector 202 will differ in the defocused cases, which is used in the electronic focus loop to adjust the optical distance from the laser to the disc. According to prior art, the difference D1-D2 between these signals is used as a measure of the optical distance.

Known from prior art is a defect detection system incorporated in compact disc players made by Philips® Corporation, where a detected dropout in the signal from the satellite beams results in a freezing of the focus loop or the focus and the radial loop. Thus, as a consequence of this dropout, the reason of which is expected to be a disc error, this system regulates the reading performance of the disc drive by preventing regulation of the beam during this signal dropout. The criterion for this freezing effect is a rapid drop of the sum of the detected intensities of the reflected light from the two satellite beams to below 75% of the actual intensity level. Similar systems are known form GB-A-2 165 064 and EP-A-0 207 374 which describe servo systems using threshold conditions to determine abnormal errors. Also known from these disc players is a shock detector that initiates a doubling of the radial control bandwidth as soon as a shock is detected, where the shock sensitivity is adjustable. Though this correction method may seem appealing, it has turned out in practice, that this system in certain cases is inadequate.

Generally, disturbances causing variations in the diode signals can be classified into mainly two groups, where the first group comprises real changes in the focus position relative to the tracks, like shocks, vibrations, acoustic action from loudspeakers, and variations in the track due to for example eccentricity and where the second group comprises disc defects which cause changes in the diode signals without changes in the position of the focus relative to the tracks, like scratches, finger marks or dust.

The first group requires fast changes in the control voltage, which typically is achieved with a larger closed loop bandwidth in the controller, whereas for the second group of disturbances, changes in the control voltage should be avoided or at least minimised, which typically is achieve with low bandwidth controller. If the closed loop has a large bandwidth, which implies a sensitive and fast regulation of the light beam following the track, the controller may have a good performance against external disturbances, but it might follow the defects of the disc surface, like scratches, instead of the track in the signal layer. This imposes conflictive requirements to the closed loop bandwidth of the system.

People at their homes or in their car may have experienced that the CD player keeps playing a short part of a track repeatedly or that it jumps randomly to another track. In worst case it may even stop playing the CD to a great surprise and irritation of the listener. In order to avoid this kind of irritation for the user by compensating for surface defects or for external disturbances, different systems have been employed in mobile disc players than in stationary disc reading systems. For optical disc players in cars, a controller is used with a fixed large bandwidth, because the disc reader is subject to substantial shocks and vibrations and the aim is not to loose track during these external disturbances. In contrast, disc drives employed in home stereo players have a controller with a relatively small fixed bandwidth in order to be specialised in compensation for scratches or finger prints on optical discs, which in case of a large bandwidth would result in following the scratches and losing the track. The price to pay for these adaptations is a limited possibility for compensation of the other type of disturbances, such that a car player may be very sensitive to surface errors of the disc, whilst the home stereo player is very sensitive to external disturbances.

It would be desirable to be able to regulate performance of the reading of these optical discs drives in dependence of the errors that are expected. For example, if a certain disc drive is used in a car, the bandwidth should be regulated to a large value, and if the same player later is used in a home studio with scratched discs, the bandwidth should be regulated to a small value. As the user typically is unaware of how to regulate the bandwidth, a manual system for such a regulation is not sufficient.

An analogous reading problem may occur for other digital data storage discs as known from personal computers, for example hard discs. Also in this case, dust on the surface or vibrations may disturb the reading from this data storage device.

It is therefore the purpose of the invention to improve the signal reading in digital data disc drives where signal reading errors occur.

This purpose is achieved by a method as mentioned by way of introduction and characterised according to claim 1.

It is assumed, that the disc drive has a signal pick-up detector system, where the pick-up detector system comprises at least two side beam detectors, with corresponding reading signals S1 and S2, and a split central detector with at least two sectors, with corresponding reading signals D1 and D2. In principle, there could be further sectors in the detectors and even further detectors. In the latter case, a man skilled in the art will be able to modify the invention to apply to such a system as well. Though explained with the above mentioned assembly of detectors in the detector system, the invention is not to be regarded as limited to this specific configuration.

For proper functioning of the data disc drive, the signals S1, S2 are read and used for keeping the focus of the detector system on track, and D1 and D2 are primarily used for proper focusing. The values of these signals will under normal condition only vary slightly until the adjustment of the optical path between the detector and the disc is optimised. The adjustment is achieved by regulating the control signal for the hardware that determines the optical path. The control signal is normally a voltage for the coils that move the detector system and/or the corresponding lens system, whereby the optical path length between the signal layer of the data disc and the detector system is changed.

During proper functioning, certain values for the reading signals S1, S2, D1 and D2 are expected. However, the actual signals may deviate from these expected values due to disturbances, for example vibrations, or disc errors, for example scratches on the disc surface. As experiments have shown, during reading errors, the signals change with a certain characteristic tendency depending on the cause of the error. Thus, different signal tendencies may be interpreted to be caused by certain types of disturbances. The interpretation may be performed by comparing the actually observed tendency with tendencies that have been observed, for example during experiments earlier, and that have been stored in a database. This interpretation is performed automatically during data reading from the data disc.

Having found a similarity between an observed tendency and a stored tendency, the error can be expected to be of a known type, and the regulation of the control signal may be performed in dependence of this expected error.

For example, in line with the introductory explanation of the desired bandwidth, the control signal response speed may be increased, if the error is expected to be due to shocks, vibrations, acoustic action from loudspeakers, or eccentricity and decreased, if the reading error is expected to be due to scratches, finger marks or dust on the disc surface.

However, as will become apparent in the following, the regulation of the control signal need not be linked to the bandwidth or response speed. Other regulation methods, as the so-called feedforward may be used. The feedforward technique may be illustrated by the following example. Assume, a signal is read from the disc. As the light beam approaches the beginning of a scratch on the disc, the read signal will become erroneous and may according to the invention be recognised correctly as being due to a scratch. In the next revolution of the disc, the scratch will appear again with the result of a new erroneous signal. However, the feedforward principle implies that the scratch is expected at that position of the track, and the new read signal, which is erroneous, can thus be corrected. This correction may in practice be done by subtracting the erroneous part of the signal of the previous revolution from the erroneous signal of the actual revolution. Thus, the signal is cleaned in such a way, that the error part of the signal is avoided or at least minimised. Complete avoidance cannot be assured, as the influence of the scratch may vary slightly from one revolution of the data disc to the next revolution.

As mentioned, the tendency of the deviation is recognised from the mutual relation between the signals S1, S2, D1 and D2. This mutual relation is equivalent to the position of an actual point (S1, S2, D1, D2) in a four dimensional space, where the position may vary in this space due to defocusing, unsatisfactory tracking and the other aforementioned error sources. The non error reading with proper focusing and tracking corresponds to a reference point in this four dimensional space. Two types of errors behave distinctively different when considered in this four dimensional space. The first type of error, namely disturbances are due to an incorrect optical path length, for example because of an incorrect pick-up position, or to deviations from the ideal track. The cause may be vibrations or eccentricity of the tracks on the data disc. This results in signals depending uniquely on the deviation in radial and focus directions and represent a surface of smaller dimensions in this four dimensional space. This surface will in the following be called the characteristic disturbance surface. The second type of error is due to disc defects as scratches, finger prints or dust on the disc. These signals points are generally not on the disturbance surface.

Through investigation, whether the signal is on the disturbance surface or not, precautionary regulation of the control signal may be initiated. If adjustment of the bandwidth is the desired regulation, the bandwidth may be increased for deviation on the disturbance surface and decreased for deviations which are not on the disturbance surface.

An example of a practical implementation is given in the following. From the mutual relation between the reading signals D1 and D2 as plotted in a two dimensional D1-D2 plot with a reference point for non error reading, the position of the actual point (D1, D2) relative to the reference point reveals the character of the error. Is the reading error due to eccentricity of the disc tracks on the disc, the position change of D1 and D2 in the two dimensional D1-D2 plot has a component in a direction parallel to the direction from origo to the reference point but towards larger distance from origo than the reference point. In case that the reading error is due to surface covering as finger prints or scratch on the surface of said disc, the position change of D 1 and D2 in the two dimensional D1-D2 plot has a component in a direction parallel to the direction from origo to the reference point and towards origo as seen from the reference point. If on the other hand, the reading error is due to mechanical vibrations, the position of D1 and D2 in the two dimensional D1-D2 plot has a component in a direction perpendicular to the direction from origo to the reference point.

Thus, by regarding the character of the deviation, the error source can be determined to a high degree and used to regulate the control signal, for example the voltage for the optical path adjustment, accordingly in order to achieve minimum disturbances of the reading performance because of the error.

In a further embodiment of the invention, the position of the disc relative to the detector system is estimated repeatedly during data reading. It has to be pointed out that a true position calculation is preferably not performed, because it suffices to estimate detector signals, as these are indicative of the relative position and of the optical path from the signal layer to the detector system. For simplicity, in the following, the term position will be used repeatedly even though the true estimation may be related to voltage signals.

A prerequisite for this estimation is a calculated model relating control signals, for example voltage signals sent to the pick-up, to the actual optical path, for example represented by detector voltages. This model ensures a first estimate for the control signal. For a new estimate, the earlier estimate is used in combination with actual detector readings. Preferably, the deviation of the actual detector signals from the expected reading signals is translated to a position deviation from a position estimate and weighted for a new position estimate in dependence of the tendency.

If the actual reading differs largely from the disturbance surface, the error is likely to be scratch, fingerprint or dust rather than a true defocusing due to a change in distance between the data disc and the pick-up. Therefore, though the deviation appears to be a distance change, it should be disregarded, or at least not weighted as much as a signal on or close to the disturbance surface. How much the signal deviation should be weighted is preferably dependent on not only the pattern or tendency of the four detector signals S1, S2, D1, D2, but also on the time dependency of the change of theses signals. Thus, for each new estimate, a preliminary estimate based on earlier estimates as well as based on the control signal is calculated. The deviation of the detector signals from that estimate is weighted to give a correction of the estimate in dependence of the characteristics of the deviation, where the characteristics reveal whether the deviation is, for example, a scratch or a disturbance.

A model, which is applicable in such kind of estimation, is the well known Kalman Filter, which is applied in statistical data models, but which has yet not been applied for this kind of problems. The Kalman Filter is an efficient recursive model for computation of estimations based on earlier estimations and present observations. Also other types of estimators are applicable, for example the so called Luenberger Observer Model.

In a further development of the invention, the method can be supported by a prior scanning of the disc in the disc drive. By this scanning, surface errors on the disc may be revealed before the true data reading starts. Information indicative of the positions of these surface errors may be stored in a database and be used for adjusting the response speed of the positioning system of the data pick up system when data are read from the disc at these particular positions. For example, the scanning may be performed along radial and/or circular paths, by which an error map of the disc is achieved. Also, the data from the scanning can be used in the aforementioned feedforward procedure.

The detection of scratches and fingerprints will in practice involve several samples of diode measurements implying a time delay from the start of the scratch until detection time. During this detection time, the position as estimated by using the Kalman filter will be erroneous, and even though the estimate is corrected from the detection time, this action is not adequate. It is therefore advantageous to correct the estimates from the time when the scratch appeared. This is possible if old estimates and control voltages are stored and used for a recalculation of estimates with small or no weight on the measurements. This method applied according to the invention for error correction during data disc reading is called backtracing.

Though the example given relates to music compact discs, the method applies equally well to other data discs, as for example hard discs in computers, Digital Video Discs and magnetic data discs as will be explained in more detail below.

The invention will be explained further in the following with reference to the drawing,
where
- FIG. 1: is a schematic of the beams on the disc surface,
- FIG. 2: shows the detector system,
- FIG. 3: is a graph illustrating the differential signal D1-D2,
- FIG. 4: is a (D1, D2) graph illustrating the effect of various errors,
- FIG. 5: shows (D1, D2) graphs for non vibration errors,
- FIG. 6: shows (D1, D2) graphs for errors including vibrations,
- FIG. 7: is a flow diagram illustrating the model correction,
- FIG. 8: shows results from a simulation without error detection,
- FIG. 9: shows results from a simulation with error detection,
- FIG. 10: shows results from a simulation with error detection and backtracing,
- FIG. 11: illustrates the change of the correction of the positioning system before and after start of an error detection algorithm,
- FIG. 12: shows a scheme for disc scanning.

FIG. 1 shows the surface of a digital data disc 110 comprising so called pits 104 representing the data stored in the signal layer of the disc 110. Typically for the reading of a CD-ROM, three beams 100, 101, 102 are applied for the reading and the control function. These three beams 100, 101, 102 may be produced from a single laser by a beam splitter arrangement. One beam 100 is intended to follows the track 105 with the pits 104 to be read for the information extraction, while two satellite beams 101, 102 are used in the electronic radial loop for centring the central beam on the track. The aim is to centre the central beam 100 with respect to the pits 104. In case that the central beam 100 is centred, the reflected intensities of the side beams 101, 102 are identical. However, in case that the beams are off-centred with respect to the track, as illustrated with beams 100', 101', and 102' or with beams 100", 101 ", and 102", the reflected signals from the two satellite beams 101', 102' or 101", 102" are different and can be used for a radial adjustment of the laser beams 100, 101, 102.

FIG. 2a shows a detector system 200 with a central detector 205 and two satellite detectors 206 and 207. The two satellite detectors 206, 207 are used for measuring the intensity of the two satellite beams 101, 102 as illustrated in FIG. 1 used for centring the beam 100. For adjustment of the focus on the optical disc, typically a split detector system 205 with a number of sectors, for example three sectors 201, 202, and 203, is employed. In FIG. 2b, the situation is shown, where the central beam 100 is focused on the signal layer of the disc. In this case, the reflected image 204 on the detector 205 is circular. In case of defocusing, the reflected image 204', 204" of the central beam on the detector, as shown in FIG. 2c and 2d, respectively, turns into ellipses due to astigmatism. The signal D1 in the first sector 201 and the signal D2 in the second sector 202 will differ in the defocused cases, which is used in the electronic focus loop to adjust the optical distance from the laser to the signal layer of the disc, as the absolute distance between the focus point and the signal layer cannot be measured directly.

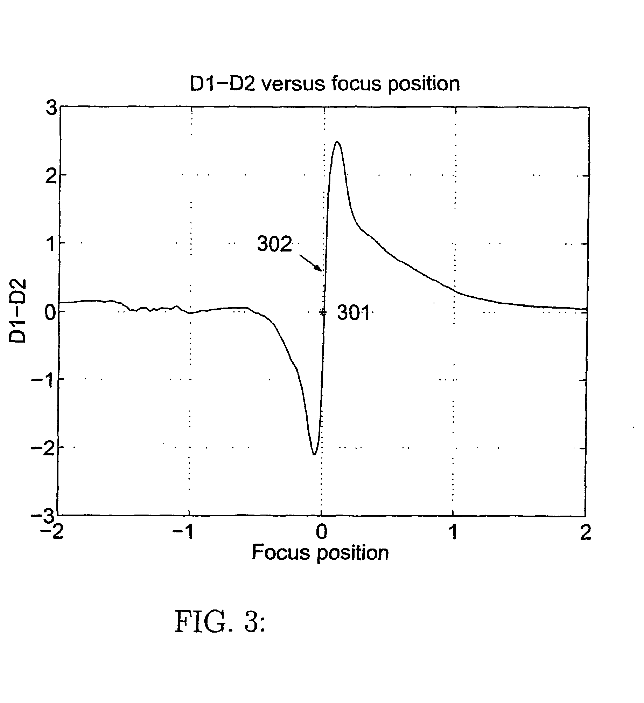

The difference D1-D2 between the measured intensities D1, D2 on the two detector segments 201 and 202 is illustrated in FIG. 3, where the abscissa is the distance from the signal layer in arbitrary units and the ordinate is the signal difference in arbitrary units. When the focus is on the signal layer, D1 equals D2, which corresponds to an abscissa equal to zero, the difference between the signal intensities D1 and D2 is zero for proper alignment. In the near vicinity of the focus 301, the difference between D1 and D2 is directly proportional to the distance between the signal layer and the focus point, which is reflected by the linear region 302.

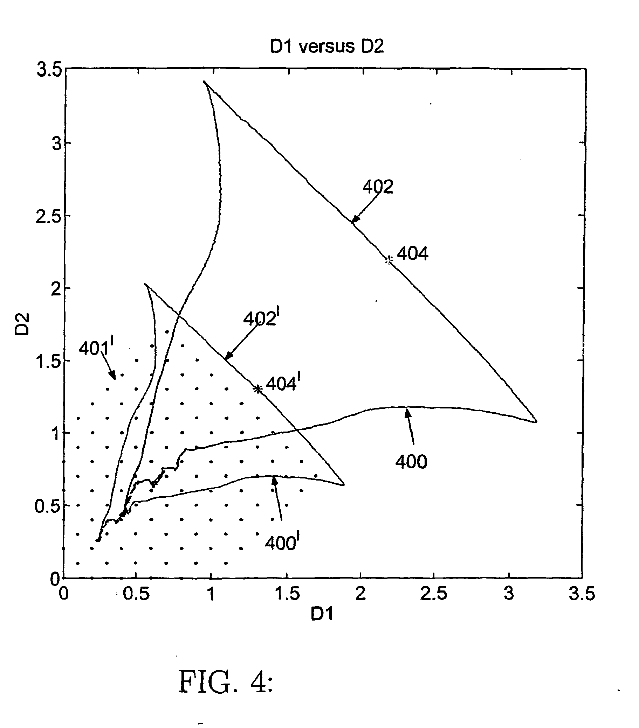

Considering only the difference between the signals D1 and D2 has the shortcoming that it is impossible to distinguish between different causes, as for example vibrations and scratches on the disc. Therefore, according to the invention, a more thorough analysis of the dependence between D1 and D2 during reading errors is used for interpretation of the reason for the error. This dependence between D1 and D2 is for convenience illustrated graphically in a two dimensional diagram in FIG. 4. The curve 400 roughly resembling a triangle corresponds to signal intensities that vary due to defocusing from the signal layer. Actually, the curve 400 corresponds to signal intensities when the radial position of the focus is off the track. In case that the radial position is on the track, the reflected intensity is smaller, because the reflectivity in the pits 104 is smaller than the reflectivity in the disc region surrounding the pits. In this case, the dependence between D1 and D2 is resembled by the smaller curve 400' in the diagram, which is equal to the larger curve apart from a scaling factor. This scaling factor is dependent on the deviation from the proper track and therefore related to the reflected signal of the side beams. Thus, the two curves 400' and 400, which both are two-dimensional projections of the characteristic disturbance surface, illustrate two extremes, namely the case of proper alignment with respect to the track and the case for reflection in the region off the track.

The linear region 302 in FIG. 3 corresponds to a linear region 402' in FIG. 4 with a corresponding focus point 404'. In case of slight defocusing, due to smaller changes of the distance between the actual focus point and the signal layer, the relationship between D1 and D2 will stay in this linear region 402'. However, in case that the signal loss of D1 and/or D2 is due to defects such as scratches, the relationship between D1 and D2 as illustrated in the diagram will have a tendency to be situated in the hatched region 401' outside the linear region 402'. Having recognised this behaviour, a change in the signals D1 and D2 can be interpreted to reveal the cause of the change, or at least give a well founded indication for the reason causing the change.

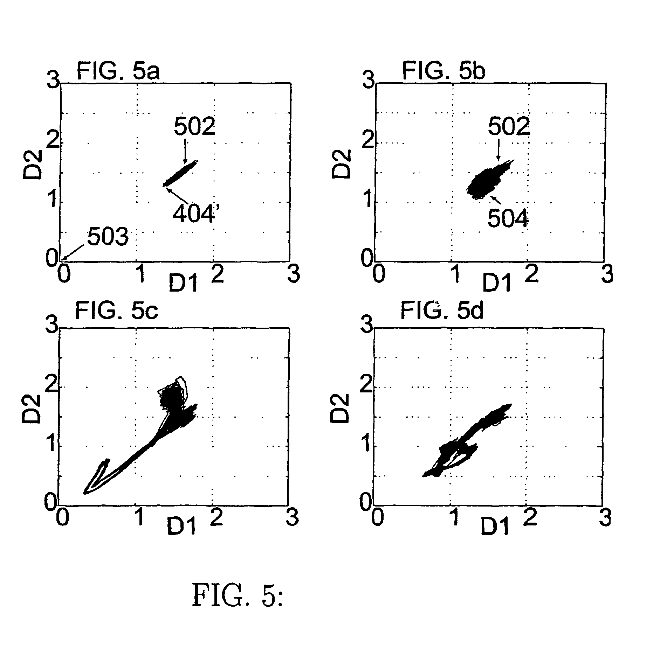

In order to illustrate possible reasons for reading errors, different situations are shown in FIG. 5 for serial measurements of the signals D1 and D2 during reading of data from a data disc.

The intensity profile as shown in FIG. 5a comprises a halo 502 pointing away from the optimum intensity 404'. Thus, the reflected intensity appears to vary between the optimum intensity 404' and a higher intensity. This can be interpreted as eccentricity of the tracks on the disc which the radial loop has to follow, but which the beam positioning system only follows with a slight delay. This eccentricity is periodic with a periodicity equal to the rotational speed of the disc. Note that the variations of the intensity of the halo 502 can be characterised as belonging to the disturbance surface in the four dimensional diode signal space.

FIG. 5b illustrates the signal as determined when tracks are read where a fingerprint covers the track. The signal in the graph contains the halo component 502 and an additional component resulting in a smeared area 504 around the focus point 404'. Note that not all intensity points in this smeared area 504 can be said to belong to the disturbance surface, because some points are located between the ideal point 404' and origo 503.

FIG. 5c illustrates the signal as determined for a scratch on the track of the disc. The scratch reduces the reflectivity of the signal layer drastically such that the signals D1 and D2 shift between high and low values. Note that in this case, the points in this intensity profile cannot be said to belong to the disturbance surface, because some points are located between the ideal point 404' and origo 503.

FIG. 5d illustrates the signal reading when the track has been painted over with ink from a pen. This case differs from the fingerprint case as illustrated in FIG. 5b and from the scratch case in FIG. 5c. Note that also in this case, the points in this intensity profile cannot be said to belong to the disturbance surface, because some points are located between the ideal point 404' and origo 503.

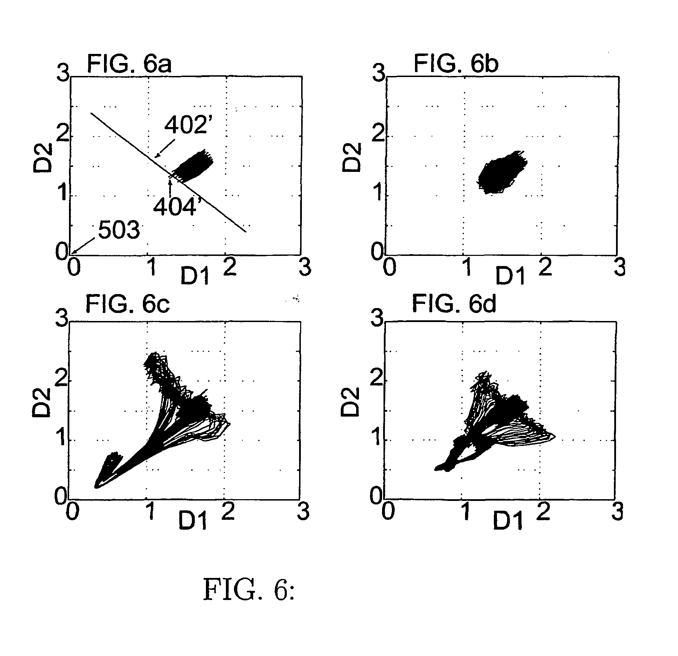

The measurements as illustrated in FIG. 5a through FIG. 5d have experimentally been repeated with the addition of vibrations, which is illustrated in FIG. 6a through 6d. In this case, the characteristic patterns of FIG. 5a through FIG. 5d are easily recognised. However, a component shifting the patterns along the direction of the linear region 402' as illustrated in FIG. 4 is added, such that the characteristic pattern is broadened along this linear direction 402', which is perpendicular to the direction from the focus point 404' to origo 503. Note that the measurements in FIG. 6a all can be characterised as belonging to the disturbance surface in the four dimensional signal space, whereas the measurements in FIG. 6.b, FIG. 6.c and FIG. 6.d all have measurements which deviate from the disturbance surface due to disc defects.

As a conclusion, different reasons for reading errors can be determined due to the nature of the signal relationship between D1 and D2. According to an expectation for the reason for a signal change or signal error, the bandwidth can be changed accordingly in order to minimise the signal dropout. The bandwidth change can be performed within a very short time, for example less than a millisecond, and the adjustment of the response speed can be achieved during the reading of the data from the signal layer of the data disc.

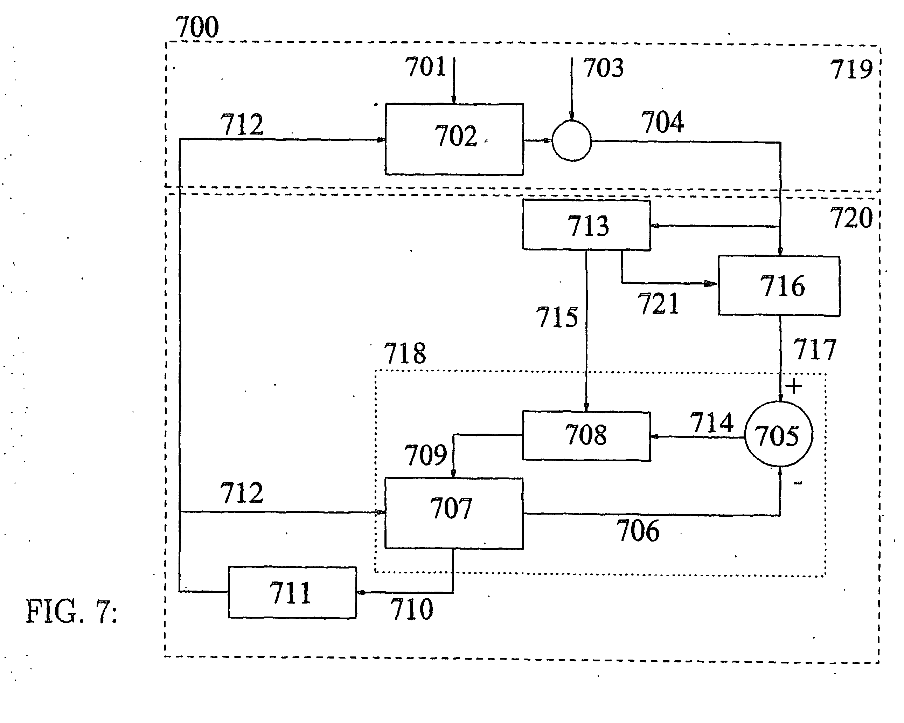

In order to optimise the reading performance by adjustment of the response speed of the positioning system, different methods may be employed. A preferred method is illustrated in FIG. 7 with a block diagram 700 which is valid for the focus corrections as well as for the radial correction, but which will be illustrated in the following for the focus correction only. The pickup system 702 comprises the detector system and in case of an optical disc drive also the light source and the optical system. The pick-up 702 is adjustable such that the optical path length between the signal layer and the detector system can be varied. The adjustment is performed as a response to the control signal 712, typically a voltage. Disturbances 701, for example external vibrations, acting on the pick-up 702 and eventual scratches 703, fingerprints, or likewise on the data disc alter the signals 704 from the diodes of the detector system. While the upper part 719 of the graph represent the mechanical part of the data disc drive, the lower part 720 of the graph represent the control system, the task of which is to generate the control signal 712 to keep the focus on the signal layer of the disc.

From the diode signals 704, the relative distance between the focus point and the signal layer is calculated 716. This calculated relative distance need not be in linear measure but may be a representative signal in arbitrary values. For example, in the most simple form, the position calculation 716 may be performed as the signal difference D1-D2, which in a close neighbourhood to the focus point 301, as illustrated on FIG. 3, is linearly dependent on the position deviation. Preferably, the position calculation also includes signals from the satellite diodes S1 and S2 to compensate for imperfect tracking in the radial direction.

The control system includes an estimator 718, the purpose of which is to calculate the model state 710. The model state 710 is a vector describing the position and motion of the pick-up system. For example, the model state vector reflects the speed and position of the focus point relative to the signal layer. From the model state 710, the control signals 712 are calculated in the controller 711. A simple calculation may be a linear combination of the elements of the model state.

The estimator 718 contains a model 707 of the pick-up position in dependence of the control voltage 712. The model 707 implements a solution of the differential equations describing the motion of the pick-up 702. The model 707 results in the model state 710 and an estimate 706 for the position of the focus point relative to the position of the signal layer. If the model 707 would calculate the state 710 using only the control voltage 712, the model state 710 and the actual state of the pick-up would diverge significantly after a short period of time due to imperfections of the model and due to disturbances 701 which are not measured. This problem is overcome by implementing a correction 709 in the position model 707 using the deviation 714 of the actually measured position 717 from the estimated position 706, which is calculated in a routine 705. The correction term 709 is calculated using the deviation 714 weighted by a correction factor 708 for each element of the state vector 710. This form for estimation is widely used in other applications and may be a Kalman filter, Luenberger or other types of estimators, which could all be used in the current invention. The estimator 718 described here is also known as a state observer.

The estimator 718 construction has the advantage that the designer may weight the information in the measured position 717 in dependence of the confidence to the measured signals 717. In this invention, the model correction 708 is controlled by a defect detection algorithm 713. The defect detection algorithm 713 generates a signal 715 for the weighting factor 708 in dependence of the tendency of the deviation of the actual reading signals from expected reading signals.

For further elaboration, three cases are considered in the following.

The first case concerns the situation when the control system 720 starts operating. In this case, there will probably be a substantial deviation between the pick-up states and the estimated states. In this situation the estimated states should converge to the pick-up states within a short time. With a proper choice of correction factors 708, it is possible to design the estimator 718 with a broad range of convergence rates, among which the designer may choose the preferred convergence rate.

In the second case, the pick-up system 702 is exposed to acceleration 701 due to mechanical shocks or vibrations. This acceleration is observed by the estimator 718 only via the correction term 709 fed in via the measurement system taking into account the correction factor 708. The estimator 718 will only be able to follow the pick-up states with a delay. Also in this case, proper choice of correction factors 708 can reduce this delay as much as the designer may find necessary to achieve sufficiently fast changing control voltages 712 calculated in the controller 711 to sufficiently reduce the position deviations caused by the disturbance. Normally this will not conflict with the choice made for the operation start.

In the third case, a scratch 703 or other defect of the disc causes variations in the diode signals 704 independently of the motion of the pick-up. In this case, the position measurement 717 deviates from the real position and the correction mechanism will tend to cause the model state 710 to change in such a way that the estimated position 706 converges to the measured position. However, tracking such an erroneous measurement would generate control voltages which would bring the pick-up to an erroneous position loosing the correct focus. Therefore, in this case, it is advantageous to use no correction at all, or at least to use correction factors that make this convergence very slow.

As is apparent from these three cases, there may seem to arise conflicts in the choice of correction factors if all situations have to be covered with the same estimator. However, according to the invention, this apparent conflicting situation is solved in the following way. The character of the signals is analysed in a routine 713 in comparison with stored data in order to determine the error reason with the highest expectation among possible error reasons, where the error reasons are found in accordance with the previous described tendencies as illustrated with FIG. 5 and FIG. 6. If the deviation or change in signal 714 can be determined to be due to scratches or the like, the analysis routine 713 sends a signal 715 causing the error reading 714 to be given a low weight in the following correction term 709. An alternative way to treat errors is sendning a signal 721 to the position calculation routine 716 instead of the signal 715, such that the measured signal is weighted before subtraction.

Various configurations of the control system using the defect detection algorithm are possible. For example, a PID (Proportional, Integration, Differentiation) controller may be applied. In this case, the detection algorithm could be used to calculate parameters in the PID controller, which reduces the bandwidth in the case of, for example, a scratch or fingerprint that has been detected. The PID controller may also be combined with an estimator, thus substituting the controller 711 in FIG 7. In this case the estimated position may be used as input to the controller 711.

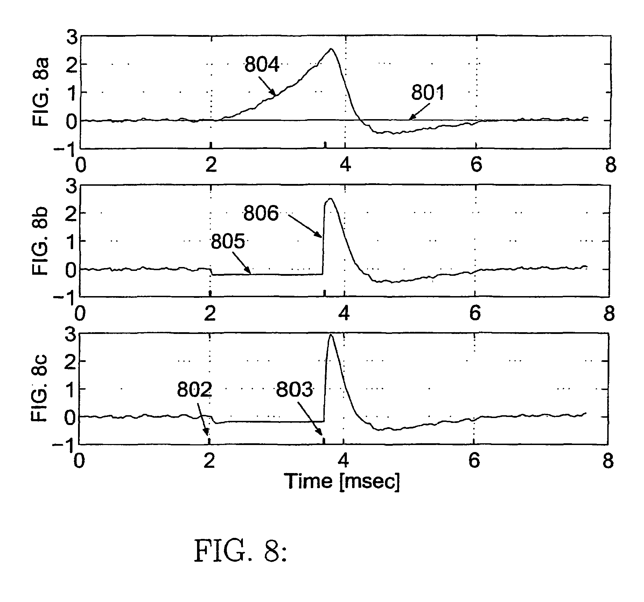

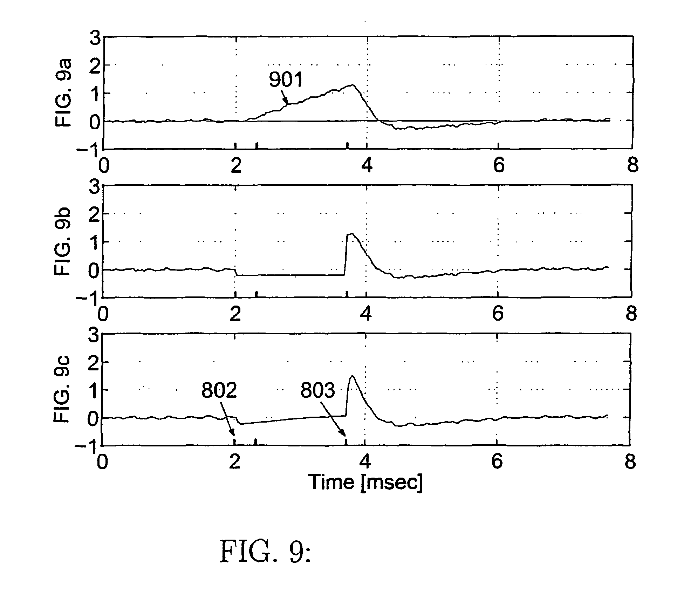

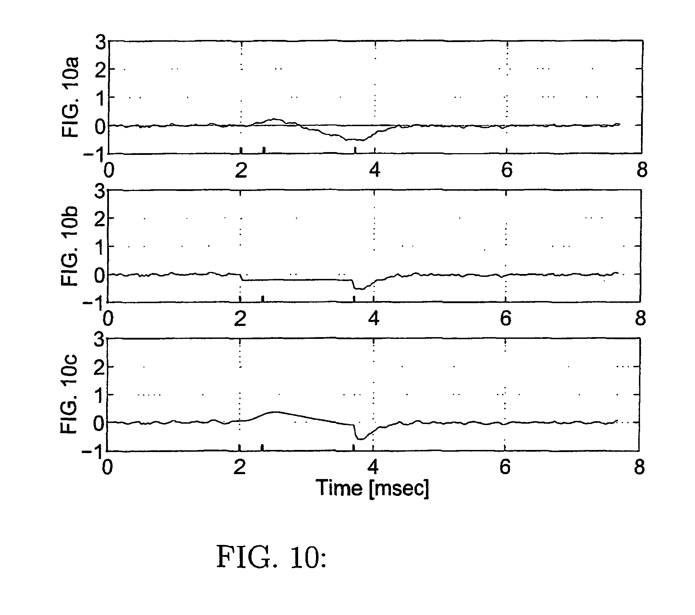

To illustrate the effect of an error, for example a scratch, on the positioning system, simulations have been performed in three cases. In the first case as illustrated in FIG. 8, the scratch passes the pick-up without any error correction performed by the controller 711. In the second case as illustrated in FIG. 9, the error is detected due to the changed signal and the controller 711 stops any correction of the pick up system. In the third case, as illustrated in FIG. 10, the error is detected and the state of the estimator is recalculated using estimates from the situation prior to the appearance of the error.

In FIG. 8a, the pick-up position is illustrated as a function of elapsed time. FIG. 8b illustrates the difference signal level D1-D2, and FIG: 8c illustrates the estimated pick up position as calculated from the D1-D2 signal. The track 801 to be followed is indicated at zero. At time 2 msec., an error, for example a scratch, starts lasting until approximately 3.7 msec.. as indicated by the two marks 802, 803 in FIG. 8c. During this defect time, the measurement of the relative position as expressed by the diode signals D1, D2 is erroneous and in the simulation, the signal difference D1-D2 is set equal to -0.2 in an arbitrary scaling as shown with 805 in FIG. 8b. Because of this signal level at -0.2, which is lower than the signal difference around zero during proper operation, the estimator 718 estimates the pick up position to be out of focus, as illustrated in FIG. 8c, and the controller 711 reacts by changing the pick-up position in order to find the proper focus position. This attempt for finding the focus, which is justified in a truly defocused case, results in this case in a large deviation 804 from the proper pick-up position. After the scratch has passed, the diode signals result in a correct measurement as illustrated with 806 in FIG. 8b, and the pick-up position is returned to a proper value at about 7 msec..

In FIG. 9, a likewise scenario is indicated where a scratch passes the beam, but in this case, the defect analysis algorithm detects a scratch at approximately 2.3 msec. Again Again between 2 msec. 802 and 3.7 msec. 803, the signals D1 and D2 are erroneous, and the level is set to -0.2. Due to the detection of an error, the level of 0.2 is regarded not as a reduced D1-D2 signal due to defocusing but as an error level, which is disregarded for the correction of the of the pick-up position estimator. Instead, the estimator calculates the control signals independently, and as illustrated in FIG. 9c, the estimated signal is gradually brought back from the level -0.2 to the zero level, which reduces the excursion 901 of the pick up before returning to the proper position. This situation is a clear improvement in comparison to the previous situation as illustrated in FIG. 8, however, it is not optimum.

According to the invention, a much better correction can be achieved, if the situation at the beginning of the defect is used for the estimation of the pick up position, which is explained in the following and illustrated in FIG. 10. In this concept called backtracing, the states and the control signals from the period before occurrence of the scratch induced error are available in the period of time which the detector actually uses for discovering the error. Thus, at the occurrence of the error at time 2 msec. as shown in FIG. 10b, the detector signal is lost, and artificially set to -0.2 as already mentioned in connection with FIG. 8 and 9. As illustrated in FIG. 10a, this initiates a movement of the pick up position in the search for a new focus position. However, as soon as the missing signal is recognised as an error, which occurs approximately at time 2.3 msec. as indicated on FIG. 10c, the position estimate is corrected by using estimates from before the start of the scratch discarding the erroneous position measurements. The estimate, which can be calculated from the time 2.3 msec.. corresponds to a correct tracing. However, other types of disturbances, as for example vibrations, can not be discovered because of the lacking measurements during the disturbance. The control signals calculated from these estimates as shown in FIG. 10c govern the movement of the pick up position back to the original proper position around the zero level as indicated in FIG. 10a. The simulation demonstrates that this back tracing has a dramatic effect on the adjustment of the pick up position.

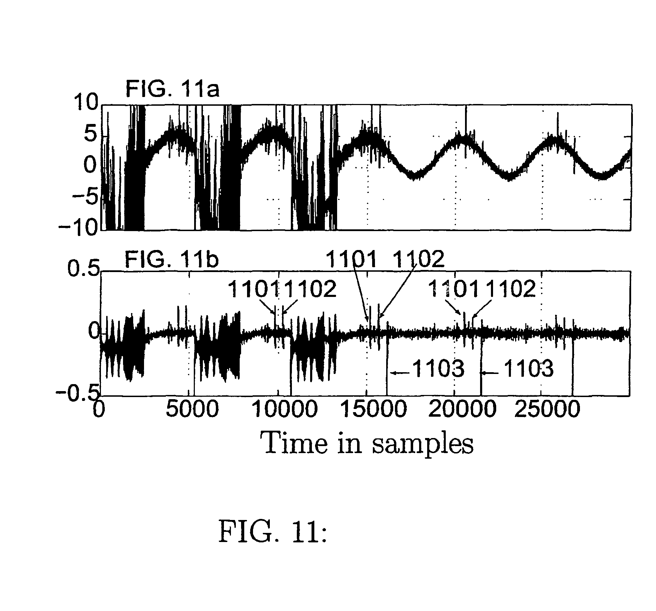

In order to evaluate the improved reading system, experiments have been performed with a disc having a surface with two slight scratches of approx. 0.25 mm width and one deep scratch of approx. 0.5 mm width. Fig. 11a shows the corresponding position control voltage of the radial position controller in the disc drive, and FIG. 11b shows the radial error on an arbitrary scale. The error detection algorithm was started at the time sample 15000 affecting the size of the estimator correction from this time on. It can clearly be observed that until the error detection system was started, the control voltage was reacting against parts of the position measurements originating from scratches such that the pick up beam was moving back and forth over the tracks. After start of the error detection algorithm, the position control voltage was in a normal positioning state. The periodic variation of the control voltage was due to variations in the track position because of eccentricity. This variation was almost perfectly tracked by the control system and cannot be seen in the measurement of the relative position. The two slight scratches may be recognised as small spikes in the position measurements 1101 and 1102 repeated with the rotational frequency. The deep scratch may be seen as spikes 1103 and, in the time until 15000, this scratch caused large oscillations in the control voltage and in the position of the pick-up system. After activation of the error detection algorithm, these oscillations disappeared.

In order to optimise the method according to the invention even further, a data disc may be scanned prior to the reading of the data from the disc. By this prior scanning, surface errors may be detected and information indicative of the position of these errors may be stored in a memory and used later during reading of the data from the disc to adjust the response speed in dependence of the prescanned errors. In addition, prerecorded sequences of position measurements recorded at the position of the scratches can be used in a feedforward technique. As an example, when passing a scratch the prerecorded sequence may be subtracted from the actual reading in order to clean the signal from contributions due to errors.

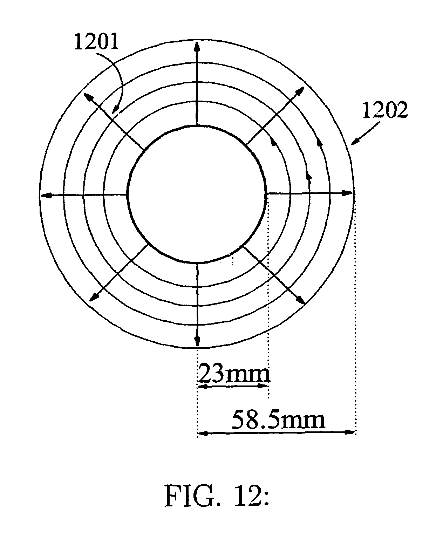

FIG. 12 shows a scheme for a possible scanning of a data disc. The disc may be scanned along radial paths 1201 or along circular paths 1202. Other paths are possible, for example spiral paths. The scanning time is dependent on the minimum size of the scratch that has to be detected. If the criterion for the minimum scratch length is 10 mm, the minimum criterion for the width is 10 micrometer and typical positioning times are implied, a typical DVD (Digital Video Disc) with an inner track diameter of 23 mm and an outer diameter of 58.6 mm can be scanned within a time less than 2 minutes.

As will be apparent for the man skilled in the art, the method according to the invention applies to optical discs as CD-ROM, Digital Video Discs, or Fluorescent Multi Layer Disc, but also to magnetic discs. The latter may have sinusoidal variations in the magnetic layer on both sides of the magnetic information track, from which data are read, where the sinusoidal variation on one side of the track has a different frequency than the variation on the other side. These sinusoidal variation can be used in an analogue manner to centre the data pick up system and to correct for errors in a way similar to the method as described in connection with optical disc above.

In the technology used to write optical disc, it is important to turn off the writing laser if the writing laser is not focused on the signal layer. Making the decision whether or not to turn off the laser is based on the focus and radial signals. According to the invention, an improvement of this decision is possible using knowledge of the mutual dependence of diode signals precisely as described for the reading of the optical disc.

## Claims

1. Method for regulating the control signal for adjustment of the optical path between the signal layer of a data disc and a signal pick-up detector system in a data disc drive, where the pick-up detector system comprises at least two side beam detectors with corresponding reading signals (S1 and S2) and a split central detector with at least two sectors with corresponding intensity reading signals (D1 and D2), wherein said control signal is regulated as a response to the deviation of the actual reading signals (S1, S2, D1, D2) from expected intensity reading signals in order to achieve minimum disturbances of the reading performance,
**characterised in that** the method comprises
- defining a signal space with points ([S1, S2, D1, D2]) representing the reading signals (S1, S2, D1 and D2), the signal space having a reference point for non error reading,
- defining a characteristic disturbance surface in the signal space being represented by reading signals depending uniquely on deviations in radial and focus directions,
- regulating the control signal in dependence of the position of said reading point in signal space for the actual reading signal on or off said characteristic disturbance surface.

2. Method according to claim 1, wherein the method comprises
- determining an expected error source from the character of the deviation of the actual reading point ([S1, S2, D1, D2]) from the reference point for non error reading in signal space by determining the position of said actual reading point in signal space in relation to said characteristic disturbance surface, and
- regulating the control signal in dependence of said error source.

3. Method according to claim 1 or 2, wherein an error reading is expected to be due to
- shocks, vibrations, acoustic action from loudspenkers or variations in the track due to eccentricity, if the actual reading signals (S1, S2, D1, and D2) belong to the characteristic disturbance surface, and expected to be due to
- scratches, finger marks or dust, if the signals S1, S2, D1, and D2 deviate from said characteristic disturbance surface.

4. Method according to claim 2 or 3, wherein said error reading is expected to be due to
- eccentricity of the disc tracks on said disc or vibrations in radial direction, if the position change of the reading signals from the split detector (D1 and D2) in the projected two dimensional plot of a first of the split detector signals (D1) versus a second of the split detector signals (D2) has a component in a direction parallel to the direction from origo of the signal space to said reference point for non error reading but towards larger distance from origo than said reference point,
- surface covering or scratch on the surface of said disc, if the position change of a first of the split detector signals (D1) and a second of the split detector signals (D2) in said projected two dimensional plot of a first of the split detector signals (D1) versus a second of the split detector signals (D2) has a component in a direction parallel to the direction from origo to said reference point and towards origo as seen from said reference point,
- mechanical vibrations in the focus direction, if the position of a first of the split detector signals (D1) and a second of the split detector signals (D2) in said projected two dimensional plot of a first of the split detector signals (D1) versus a second of the split detector signals (D2) has a component in a direction perpendicular to the direction from origo to said reference point.

5. Method according to any of the claims 1-4, wherein the control signal is regulated by adjusting a response speed of the control signal in dependence of the position of said actual reading point in signal space in relation to said characteristic disturbance surface.

6. Method according to claim 5 when dependent on claim 3 of 4, wherein said response speed is increased, if an error reading is expected to be due to shocks, vibrations, acoustic action from loudspeaker or eccentricity and decreased, if the error reading is expected to be due to scratches, finger marks or dust.

7. Method according to any of the claims 2, 3, 4, and 6, wherein said deviation of the actual reading signals (S1, S2, D1, and D2) from the expected reading signals is translated to a pick-up detector position deviation from a position estimate and weighted with a weighting factor for a new pick-up detector position estimate in dependence on the position of said actual reading signal in said signal space relative to said characteristio disturbance surface.

8. Method according to claim 7, wherein said position estimate is based on a Kalman Filter or a Luenberger Estimator.

9. Method according claims 7 or 8, wherein the weighting factor is dependent on said expected error source.

10. Method according to any of the. claims, wherein the method comprises a feedforward procedure for minimising error parts of reading signals, said feedforward procedure implying recognising of an error, preferably a scratch, in the reading signal during signal reading and correcting an erroneous reading signal after one complete resolution of the disc in dependence of the recognised error.

11. Method according to claim 10, wherein the correcting of the erroneous signal implies subtraction of the erroneous part of the reading signal after said one complete resolution.

12. Method according to any of the previous claims, wherein said method inviolves scanning of a digital data disc in said digital data disc drive, preferably along radial and/or circular paths, for finding surface errors on said data disc prior to data reading, storing in a database information indicative of the positions and characteristics of said surface errors on said disc, and according to these data, adjusting said control signal for said data pick up system when data are read from said disc at these positions.

## Patentansprüche

1. Verfahren zum Regeln des Steuersignals zur Einstellung des Lichtweges zwischen der Signalschicht einer Datenplatte und einem Signalaufnahmedetektorsystem in einem Datenplattenlaufwerk, wobei das Aufnahmedetektorsystem mindestens zwei Seitenstrahldetektoren mit entsprechenden Lesesignalen (S1 und S2) und einen geteilten Zentraldetektor mit mindestens zwei Sektoren mit entsprechenden Intensitätslesesignalen (D1 und D2) aufweist, wobei das Steuersignal in Reaktion auf die Abweichung der aktuellen Lesesignale (S1, S2, D1, D2) von erwarteten Intensitätslesesignalen geregelt wird, um minimale Störungen der Leseleistung zu erreichen,
**dadurch gekennzeichnet, dass** das Verfahren umfasst,
- einen Signalraum mit Punkten ([S1, S2, D1, D2]) zu definieren, die die Lesesignale (S1, S2, D1 und D2) darstellen, wobei der Signalraum einen Bezugspunkt für fehlerfreies Lesen aufweist,
- eine charakteristische Störungsfläche in dem Signalraum zu definieren, die durch Lesesignale dargestellt wird, die von Abweichungen in Radial- und Fokusrichtungen eindeutig abhängen,
- das Steuersignal in Abhängigkeit von der Position des Lesepunktes im Signalraum für die aktuellen Lesesignale auf oder abseits der charakteristischen Störungsfläche zu regeln.

2. Verfahren nach Anspruch 1, bei dem das Verfahren umfasst,
- eine erwartete Fehlerquelle aus dem Charakter der Abweichung des aktuellen Lesepunktes ([S1, S2, D1, D2]) von dem Bezugspunkt für fehlerfreies Lesen im Signalraum zu bestimmen, indem die Position des aktuellen Lesepunktes im Signalraum im Verhältnis zu der charakteristischen Störungsfläche bestimmt wird, und
- das Steuersignal in Abhängigkeit von der Fehlerquelle zu regeln.

3. Verfahren nach Anspruch 1 oder 2, bei dem ein Fehlerlesen erwartet wird aufgrund von
- Stößen, Schwingungen, akustischer Wirkung von Lautsprechern oder Veränderungen der Spur aufgrund von Exzentrizität, wenn die aktuellen Lesesignale (S1, S2, D1 und D2) zu der charakteristischen Störungsfläche gehören, und erwartet wird aufgrund von
- Kratzern, Fingerspuren oder Staub, wenn die Signale S1, S2, D1 und D2 von der charakteristischen Störungsfläche abweichen.

4. Verfahren nach Anspruch 2 oder 3, bei dem ein Fehlerlesen erwartet wird aufgrund von
- Exzentrizität der Plattenspuren auf der Platte oder Schwingungen in Radialrichtung, wenn die Positionsänderung der Lesesignale vom geteilten Detektor (D1 und D2) in der projizierten zweidimensionalen Darstellung eines ersten der Signale des geteilten Detektors (D1) gegen ein zweites der Signale des geteilten Detektors (D2) eine Komponente in einer Richtung parallel zu der Richtung vom Ursprung des Signalraums zu dem Bezugspunkt für fehlerfreies Lesen aber in Richtung auf größere Entfernung vom Ursprung als von dem Bezugspunkt hat,
- Oberflächenabdeckung oder Kratzer auf der Oberfläche der Platte, wenn die Positionsänderung eines ersten der Signale des geteilten Detektors (D1) und eines zweiten der Signale des geteilten Detektors (D2) in der projizierten zweidimensionalen Darstellung eines ersten der Signale des geteilten Detektors (D1) gegen ein zweites der Signale des geteilten Detektors (D2) eine Komponente in einer Richtung parallel zu der Richtung vom Ursprung zu dem Bezugspunkt und in Richtung auf den Ursprung wie von dem Bezugspunkt aus gesehen hat,
- mechanische Schwingungen in der Fokusrichtung, wenn die Position eines ersten der Signale des geteilten Detektors (D1) und eines zweiten der Signale des geteilten Detektors (D2) in der projizierten zweidimensionalen Darstellung eines ersten der Signale des geteilten Detektors (D1) gegen ein zweites der Signale des geteilten Detektors (D2) eine Komponente in einer Richtung senkrecht zu der Richtung vom Ursprung zu dem Bezugspunkt hat.

5. Verfahren nach einem der Ansprüche 1 bis 4, bei dem das Steuersignal durch Einstellen einer Reaktionsgeschwindigkeit des Steuersignals in Abhängigkeit von der Position des aktuellen Lesepunktes im Signalraum im Verhältnis zu der charakteristischen Störungsfläche geregelt wird.

6. Verfahren nach Anspruch 5, wenn von Anspruch 3 oder 4 abhängig, bei dem die Reaktionsgeschwindigkeit vergrößert wird, wenn Fehlerlesen aufgrund von Stößen, Schwingungen, akustischer Wirkung von Lautsprechern oder Exzentrizität erwartet wird, und verkleinert wird, wenn das Fehlerlesen aufgrund von Kratzern, Fingerspuren oder Staub erwartet wird.

7. Verfahren nach einem der Ansprüche 2, 3, 4 und 6, bei dem die Abweichung der aktuellen Lesesignale (S1, S2, D1 und D2) von den erwarteten Lesesignalen in eine Positionsabweichung des Aufnahmedetektors von einem Positionsschätzwert übersetzt wird und mit einem Gewichtungsfaktor für einen neuen Positionsschätzwert des Aufnahmedetektors in Abhängigkeit von der Position des aktuellen Lesesignals in dem Signalraum relativ zu der charakteristischen Störungsfläche gewichtet wird.

8. Verfahren nach Anspruch 7, bei dem der Positionsschätzwert auf einem Kalman-Filter oder einer Luenberger-Schätzfunktion basiert.

9. Verfahren nach Anspruch 7 oder 8, bei dem der Gewichtungsfaktor von der erwarteten Fehlerquelle abhängt.

10. Verfahren nach einem der vorhergehenden Ansprüche, bei dem das Verfahren eine Vorwärtsprozedur zum Minimieren von Fehlerteilen der Lesesignale umfasst, welche Vorwärtsprozedur beinhaltet, einen Fehler, bevorzugt einen Kratzer, in dem Lesesignal während des Signallesens zu erkennen und ein fehlerhaftes Lesesignal nach einer vollständigen Umdrehung der Platte in Abhängigkeit von dem erkannten Fehler zu korrigieren.

11. Verfahren nach Anspruch 10, bei dem die Korrektur des fehlerhaften Signals Subtraktion des fehlerhaften Teils des Lesesignals nach der einen vollständigen Umdrehung beinhaltet.

12. Verfahren nach einem der vorhergehenden Ansprüche, bei dem das Verfahren umfasst, eine digitale Datenplatte in dem digitalen Plattenlaufwerk abzutasten, bevorzugt entlang radialer und/oder kreisförmiger Wege, um Oberflächenfehler auf der Datenplatte vor dem Lesen von Daten zu finden, Informationen, die die Positionen und Charakteristiken der Oberflächenfehler auf der Platte anzeigen, in einer Datenbank zu speichern und in Übereinstimmung mit diesen Daten das Steuersignal für das Datenaufnahmesystem einzustellen, wenn in diesen Positionen Daten von der Platte gelesen werden.

## Revendications

1. Procédé pour réguler un signal de commande en vue de l'ajustement du chemin optique entre la couche de signal d'un disque de données et un système de détection de signal au sein d'un lecteur de disque de données, dans lequel le système de détection comprend au moins deux détecteurs de faisceaux latéraux munis de signaux de lecture correspondants (S1 et S2) et un détecteur central de coupure muni d'au moins deux secteurs possédant des signaux de lecture d'intensité correspondants (D1 et D2), dans lequel ledit signal de commande est régulé en réponse à la déviation des signaux de lecture réels (S1, S2, D1, D2) par rapport aux signaux de lecture d'intensité prévus afin d'obtenir des perturbations minimales des performances de lecture,
**caractérisé en ce que** le procédé comprend
- la définition d'un espace de signal avec des points ([S1, S2, D1, D2]) représentant les signaux de lecture (S1, S2, D1 et D2), l'espace de signal possédant un point de référence pour la lecture non erronée,
- la définition d'une surface de perturbation caractéristique dans l'espace de signal représentée par des signaux de lecture dépendant uniquement des déviations dans les directions radiale et focale,
- la régulation du signal de commande en fonction de la position dudit point de lecture dans l'espace de signal pour les signaux de lecture réels situés à l'intérieur et à l'extérieur de ladite surface de perturbation caractéristique.

2. Procédé selon la revendication 1, dans lequel le procédé comprend
- la détermination d'une source d'erreur prévue à partir du caractère de la déviation du point de lecture réel ([S1, S2, D1, D2]) par rapport au point de référence de la lecture non erronée au sein de l'espace de signal en déterminant la position dudit point de lecture réel dans l'espace de signal par rapport à ladite surface de perturbation caractéristique, et
- la régulation du signal de commande en fonction de ladite source d'erreur.

3. Procédé selon la revendication 1 ou 2, dans lequel une lecture d'erreur est envisagée comme étant due à
- des chocs, des vibrations, une action acoustique des haut-parleurs ou des variations de piste dus à l'excentricité, si les signaux de lecture réels (S1, S2, D1, D2) appartiennent à la surface de perturbation caractéristique, et est envisagée comme étant due à
- des rayures, des marques de doigts ou de la poussière, si les signaux S1, S2, D1 et D2 dévient de ladite surface de perturbation caractéristique.

4. Procédé selon la revendication 2 ou 3, dans lequel ladite lecture d'erreur est envisagée comme étant due à
- l'excentricité des pistes du disque sur ledit disque ou à des vibrations dans la direction radiale, si le changement de position des signaux de lecture du détecteur de coupure (D1 et D2) dans la représentation projetée en deux dimensions d'un premier des signaux du détecteur de coupure (D1) par rapport à un deuxième des signaux du détecteur de coupure (D2) possède un composant orienté dans une direction parallèle à la direction allant du début de l'espace de signal jusqu'audit point de référence pour la lecture non erronée, mais vers une distance plus importante par rapport audit point de référence,
- un recouvrement de la surface ou une rayure sur la surface dudit disque, si le changement de position d'un premier des signaux du détecteur de coupure (D1) et d'un deuxième des signaux du détecteur de coupure (D2) dans ladite représentation projetée en deux dimensions d'un premier des signaux du détecteur de coupure (D1) par rapport à un deuxième des signaux du détecteur de coupure (D2) possède un composant dans une direction parallèle à la direction allant du début jusqu'audit point de référence, et vers le début à partir dudit point de référence,
- des vibrations mécaniques dans la direction focale, si la position d'un premier des signaux du détecteur de coupure (D1) et d'un deuxième des signaux du détecteur de coupure (D2) dans ladite représentation projetée en deux dimensions d'un premier des signaux du détecteur de coupure (D1) par rapport à un deuxième des signaux du détecteur de coupure (D2) possède un composant dans une direction perpendiculaire à la direction allant du début jusqu'audit point de référence.

5. Procédé selon l'une quelconque des revendications 1 à 4, dans lequel le signal de commande est régulé en ajustant une vitesse de réponse du signal de commande en fonction de la position dudit point de lecture réel au sein de l'espace de signal par rapport à ladite surface de perturbation caractéristique.

6. Procédé selon la revendication 5 lorsqu'elle dépend de la revendication 3 ou 4, dans lequel ladite vitesse de réponse est augmentée si une lecture d'erreur est envisagée comme étant due à des chocs, des vibrations, une action acoustique des haut-parleurs ou une excentricité, et est réduite si la lecture d'erreur est envisagée comme étant due à des rayures, des marques de doigts ou de la poussière.

7. Procédé selon l'une quelconque des revendications 2, 3, 4 et 6, dans lequel ladite déviation des signaux de lecture réels (S1, S2, D1 et D2) par rapport aux signaux de lecture prévus est transformée en une déviation de position du détecteur d'excitation à partir d'une estimation de position, et est pondérée avec un facteur de pondération afin d'estimer une nouvelle position du détecteur d'excitation en fonction de la position dudit signal de lecture réel dans ledit espace de signal par rapport à ladite surface de perturbation caractéristique.

8. Procédé selon la revendication 7, dans lequel ladite estimation de position est basée sur un filtre de Kalman ou un estimateur de Luenberger.

9. Procédé selon les revendications 7 ou 8, dans lequel le facteur de pondération dépend de ladite source d'erreur prévue.

10. Procédé selon l'une quelconque des revendications, dans lequel le procédé comprend une procédure d'anticipation pour minimiser les erreurs des signaux de lecture, ladite procédure d'anticipation impliquant la reconnaissance d'une erreur, de préférence une rayure, au sein du signal de lecture pendant la lecture du signal, et la correction d'un signal de lecture erroné après que le disque ait effectué un tour complet en fonction de l'erreur reconnue.

11. Procédé selon la revendication 10, dans lequel la correction du signal erroné implique la soustraction de la partie erronée du signal de lecture après ledit tour complet.

12. Procédé selon l'une quelconque des revendications précédentes, dans lequel ledit procédé implique l'exploration de données numériques dans ledit lecteur de disque de données numériques, de préférence sur des trajets radiaux et/ou circulaires, afin de découvrir des erreurs de surface sur ledit disque de données avant la lecture des données, le stockage dans une base de données des informations indiquant les positions et les caractéristiques desdites erreurs de surface sur ledit disque, et, en fonction de ces données, l'ajustement dudit signal de commande pour ledit système de détection de données lorsque les données sont lues à partir dudit disque à ces positions.
